# EUROPÄISCHE PATENTSCHRIFT

(11) **EP 2 945 006 B1**
(45) Veröffentlichungstag und Bekanntmachung des Hinweises auf die Patenterteilung: **05.07.2017**
(21) Anmeldenummer: 14168197.3
(22) Anmeldetag: 13.05.2014
(51) Int. Cl.: G02C 5/00

(54) **Brille sowie Verfahren zur Herstellung einer Brille**
Spectacles and method for manufacturing spectacles
Lunettes et procédé de fabrication de lunettes

(43) Veröffentlichungstag der Anmeldung: 18.11.2015
(73) Patentinhaber: Gasser, Hannes, 39042 Brixen (BZ) (IT); Gasparini, Fabio, 39042 Brixen (BZ) (IT); Oberrauch, Werner, 39042 Brixen (BZ) (IT); Clara, Rafael, 39030 San Martino in Badia (BZ) (IT)
(72) Erfinder: Gasser, Hannes, 39042 Brixen (BZ) (IT); Gasparini, Fabio, 39042 Brixen (BZ) (IT); Oberrauch, Werner, 39042 Brixen (BZ) (IT); Clara, Rafael, 39030 San Martino in Badia (BZ) (IT)
(74) Vertreter: 2s | ip Schramm Schneider Patentanwälte Rechtsanwälte

(56) Entgegenhaltungen:
- EP-A1- 2 685 305
- WO-A1-2013/144774
- AT-B- 381 397
- DE-C1- 4 122 966
- JP-A- H11 227 062
- US-A1- 2011 205 483

## Beschreibung

### Gegenstand der Erfindung

Die Erfindung betrifft ein Brillengestell, sowie ein Verfahren zur Herstellung eines erfindungsgemäßen Brillengestells, wobei das Brillengestell eine Fassung und Bügel umfasst.

### Hintergrund der Erfindung und Stand der Technik

Brillen als optisches Hilfsmittel zur Korrektur von beispielsweise Fehlsichtigkeit der Augen oder als modisches Accessoire sind aus dem Stand der Technik in vielfältiger Art und Weise bekannt.

Eine herkömmliche Brille besteht im Wesentlichen aus einer Fassung, zwei an die Fassung angelenkte Bügel und die von der Fassung gehalterten Brillengläser. An die Fassung und die Bügel werden dabei besondere Anforderungen an Material und Aussehen gestellt. Die Fassung und die Bügel sollten vorzugsweise leicht und flexibel und gleichzeitig stabil und haltbar sein. Für die Herstellung der Fassung bzw. der Bügel werden üblicherweise unterschiedliche Metalle und Metalllegierungen verwendet. Alternativ werden Kunststoffe oder verschiedene Spritzgussmaterialien für die Herstellung des Brillengestells verwendet. Die Verwendung solcher Materialien zur Herstellung des Brillengestells hat allerdings den Nachteil, dass einerseits je nach verwendetem Material die Materialkosten sehr hoch sein können und andererseits die Herstellung eines Brillengestells zeit- und kostenintensiv ist.

Ferner sind aus dem Stand der Technik sogenannte Einwegbrillen, etwa zur Beobachtung einer Sonnenfnsternis, bekannt. Solche Einwegbrillen bzw. die Brillengestelle solcher Einwegbrillen werden üblicherweise aus einem etwas dickeren Karton gefertigt, wobei als "Gläser" spezielle für die jeweilige Anwendung geeignete Folien auf das Brillengestell geklebt werden. Solche Einwegbrillen haben zwar den Vorteil, dass sie einfach und kostengünstig herstellbar sind. Nachteilig ist allerdings, dass aufgrund der sehr geringen bzw. fehlenden Stabilität und Haltbarkeit des Brillengestells solche Einwegbrillen für den täglichen Gebrauch ungeeignet sind. Ferner können solche Brillengestelle aufgrund ihrer unzureichenden Stabilität keine Brillengläser aus mineralischem Glas oder Kunststoffgläser aufnehmen.

Aus der EP 2 685 305 A1 ist eine laminierte Brillenfassung und ein Verfahren zur Herstellung einer laminierten Brillenfassung bekannt. Die Brillenfassung kann aus Papier bzw. mehreren Papierschichten hergestellt werden. Die einzelnen Schichten der Brillenfassung werden zunächst aus planen Papierstücken herausgeschnitten, wobei die einzelnen Schichten unterschiedlich dimensioniert sind, um eine Biegung der einzelnen Schichten bei Zusammenfügen auszugleichen, sodass keine randseitigen Überstände entstehen. Die herausgeschnittenen Papierschichten werden dann miteinander verbunden, etwa verklebt, um so die Brillenfassung zu erhalten.

### Aufgabe der Erfindung

Aufgabe der vorliegenden Erfindung ist es daher, Lösungen bereitzustellen die die aus dem Stand der Technik bekannten Nachteile zumindest teilweise vermeiden und die eine schnelle und präzise Herstellung eine Brillengestells aus Papier ermöglichen.

### Erfindungsgemäße Lösung

Diese Aufgabe wird erfindungsgemäß durch ein Brillengestell sowie durch ein Verfahren zur Herstellung eines Brillengestells nach den unabhängigen Ansprüchen gelöst. Vorteilhafte Ausgestaltungen und Weiterbildungen der Erfindung sind in den jeweiligen abhängigen Ansprüchen angegeben.

### Kurzbeschreibung der Figuren

Einzelheiten und Merkmale der Erfindung sowie konkrete Ausgestaltungen der Erfindung ergeben sich aus der nachfolgenden Beschreibung in Verbindung mit der Zeichnung. Es zeigt:
- Fig. 1: einen mehrlagigen Papierstapel, aus dem ein erfindungsgemäßes Brillengestell hergestellt wird, zur Verdeutlichung des ersten Verfahrensschrittes eines erfindungsgemäßen Verfahrens zur Herstellung eines Brillengestells;
- Fig. 2: einen Querschnitt durch einen mehrlagigen Papierstapel in einer Detailansicht;
- Fig. 3: einen weiteren Verfahrensschritt des erfindungsgemäßen Verfahrens;
- Fig. 4: eine in dem gemäß Fig. 3 gezeigten Verfahrensschritt hergestellte Grundform eines erfindungsgemäßen Brillengestells;

Schwenkmittel im "Knickbereich" bzw. im "Schwenkbereich" eine zusätzliche Stabilität verliehen.

In einer vorteilhaften Ausgestaltung des Brillengestells sind in der Fassung bzw. in dem die Brillengläser aufnehmenden Teil der Fassung zumindest teilweise umlaufende Nuten zur Aufnahme von Brillengläsern vorgesehen.

An den Bügeln und an der Fassung können Magnete angeordnet sein, wobei die Magnete der Bügel mit den Magneten der Fassung zusammenwirken, um die Bügel im geöffneten Zustand zu stabilisieren, d.h. ein selbstständiges Schließen bzw. Zusammenklappen der Bügel zu verhindern.

Bereitgestellt wird durch die Erfindung ferner ein Verfahren zur Herstellung eines Brillengestells, umfassend eine Fassung und Bügel, wobei
- aus einer Anzahl von Materiallagen ein Stapel hergestellt wird, wobei zwischen den Materiallagen ein vorzugsweise aushärtbares Klebemittel eingebracht wird, um die Materiallagen unlösbar miteinander zu verbinden, und
- aus dem hergestellten Stapel das Brillengestell herausgetrennt wird.

Vorteilhaft ist es, wenn vor dem Heraustrennen des Brillengestells der hergestellte Stapel gebogen wird, insbesondere unter Verwendung eines Formwerkzeuges bzw. eines Stempels, um eine Grundform des Brillengestells zu erhalten.

Vorteilhaft ist es hier insbesondere, wenn der hergestellte Stapel gebogen wird, solange das Klebemittel nicht ausgehärtet ist.

Das Formwerkzeug und der an dem Formwerkzeug anliegende Stapel kann einer Unterdruck- oder Vakuumeinrichtung zugeführt werden, mit der der Stapel an das Formwerkzeug gepresst wird. Durch die Unterdruck- bzw. Vakuumbehandlung des an dem Formwerkzeug anliegenden Stapels wird zudem erreicht, dass das Klebemittel in die Materiallagen eindringt.

Vorzugsweise verbleibt das Formwerkzeug und der an dem Formwerkzeug anliegende Stapel solange in der Unterdruck- oder Vakuumeinrichtung, bis der Stapel weitestgehend getrocknet ist und/oder bis das Klebemittel weitestgehend ausgehärtet ist.

In einer alternativen Ausgestaltung der Erfindung kann es auch vorgesehen sein, dass vor der Unterdruck- bzw. Vakuumbehandlung das Brillengestell aus dem hergestellten Stapel herausgetrennt wird und das herausgetrennte Brillengestell unter Verwendung des Formwerkzeuges gebogen wird und das Formwerkzeug und das an dem Formwerkzeug anliegende Brillengestell der Unterdruck- oder Vakuumeinrichtung zugeführt wird, wobei das Formwerkzeug und das an dem Formwerkzeug anliegende Brillengestell solange in der Unterdruck- oder Vakuumeinrichtung verbleibt, bis das Brillengestell weitestgehend getrocknet ist und/oder bis das Klebemittel weitestgehend ausgehärtet ist.

Vor dem Biegen des Stapels oder alternativ nach dem Biegen des Stapels kann an der Oberseite und/oder an der Unterseite des Stapels zumindest eine Oberflächenlage aufgebracht werden und mit dem Stapel verbunden werden. Mit der Oberflächenlage kann das Brillengestell vor äußeren Einflüssen geschützt werden und/oder dem Brillengestell kann ein besonders vorteilhaftes ästhetisches Erscheinungsbild verliehen werden.

In einer Ausgestaltung kann die Oberflächenlage mit dem Klebemittel mit dem Stapel unlösbar verbunden werden. Zusätzlich oder alternativ hierzu kann an der dem Stapel zugewandten Oberfläche der Oberflächenlage oder an der Oberfläche des Stapels eine Schutzschicht aufgebracht werden, die angepasst ist, die Oberflächenlage mit dem Stapel unlösbar zu verbinden und das äußere Erscheinungsbild der Oberflächenlage weitestgehend nicht zu verändern.

Die Oberflächenlage und/oder das Klebemittel können angepasst sein, dass das Klebemittel die Oberflächenlage durchdringt und die Oberflächenlage dadurch zumindest teilweise transparent ausgestaltet. Vorteilhaft ist es, wenn die Schutzschicht ein Polypropylen umfasst.

Das Brillengestell kann mit einer Schneideeinrichtung, insbesondere eine Fräseinrichtung, aus der Grundform, d.h. aus dem gebogenen, ausgehärteten und getrockneten Stapel, herausgetrennt werden. Zusätzlich können in das Brillengestell Nuten gefräst werden, die zur Aufnahme eines Brillenglases vorgesehen sind.

In einer Ausgestaltung des erfindungsgemäßen Verfahrens können bei dem herausgetrennten Brillengestell die Bügel von der Fassung abgetrennt werden, vorzugsweise unter Verwendung einer Schneidemaschine, und die abgetrennten Bügel können jeweils mit einem Schwenkmittel, vorzugsweise eine Scharniere, an die Fassung angelenkt werden.

Das Schwenkmittel kann aus einer Anzahl gestapelter und mit dem Klebemittel verklebter Materiallagen, insbesondere Papierblätter oder Blätter aus papierähnlichem Material, gebildet werden, wobei das Schwenkmittel mit dem Klebemittel an die Bügel und an die Fassung geklebt wird.

In einer Ausgestaltung der der Erfindung können bei dem herausgetrennten Brillengestell die Bügel lediglich teilweise von der Fassung abgetrennt werden, sodass die Bügel an der Innenseite mit zumindest einer Materiallage mit der Fassung verbunden sind bzw. verbunden bleiben. Diese zumindest eine Materiallage kann jeweils ein Schwenkmittel bilden, mit dem der jeweilige Bügel an der Fassung angelenkt ist.

Die Schwenkmittel können zumindest teilweise einen Kunststoff aufweisen oder mit einem Kunstsoff beschichtet werden.

In einer Ausgestaltung der Erfindung können die Schwenkmittel Scharniere aus einem Metall umfassen.

Nach dem Heraustrennen des Brillengestells kann die Oberfläche des Brillengestells poliert, geschliffen und/oder geglättet werden. Ferner kann die Oberfläche des Brillengestells mit einer Schutzschicht, insbesondere Lackschicht, überzogen werden.

In einer vorteilhaften Ausgestaltung der Erfindung können die Materiallagen und/oder die Oberflächenlagen Papierblätter und/oder Blätter aus papierähnlichem Material und/oder Blätter aus einem Material mit papierähnlichen Eigenschaften umfassen. Das Klebemittel kann ein Harz, insbesondere einen Zwei-Komponenten-Harz oder Epoxidharz umfassen.

### Kurzbeschreibung der Figuren

Einzelheiten und Merkmale der Erfindung sowie konkrete Ausgestaltungen der Erfindung ergeben sich aus der nachfolgenden Beschreibung in Verbindung mit der Zeichnung. Es zeigt:

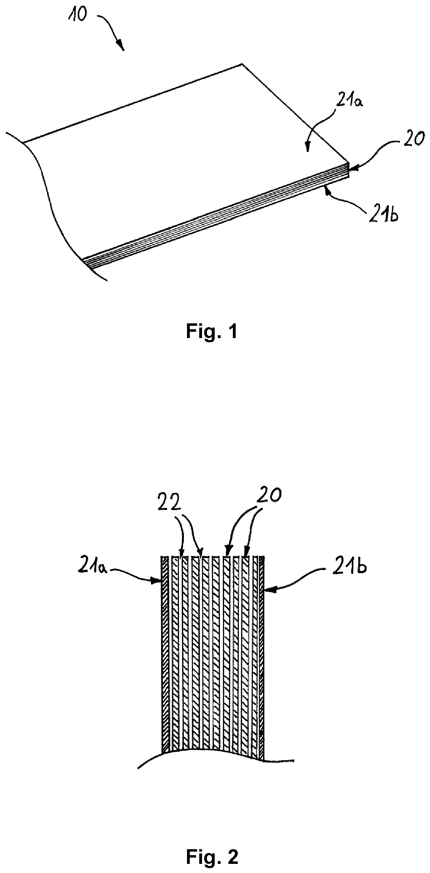

- Fig. 1: einen mehrlagigen Papierstapel, aus dem ein erfindungsgemäßes Brillengestell hergestellt wird, zur Verdeutlichung des ersten Verfahrensschrittes eines erfindungsgemäßen Verfahrens zur Herstellung eines Brillengestells;
- Fig. 2: einen Querschnitt durch einen mehrlagigen Papierstapel in einer Detailansicht;

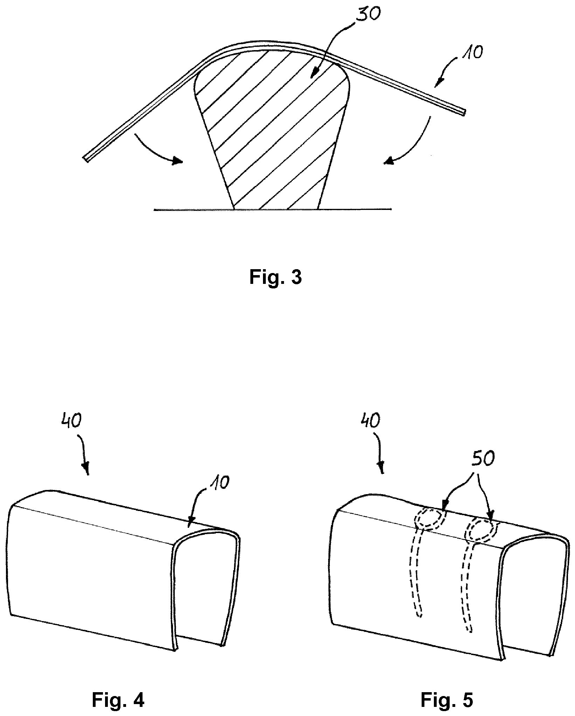

- Fig. 3: einen weiteren Verfahrensschritt des erfindungsgemäßen Verfahrens;
- Fig. 4: eine in dem gemäß Fig. 3 gezeigten Verfahrensschritt hergestellte Grundform eines erfindungsgemäßen Brillengestells;
- Fig. 5: einen weiteren Schritt des erfindungsgemäßen Verfahrens;

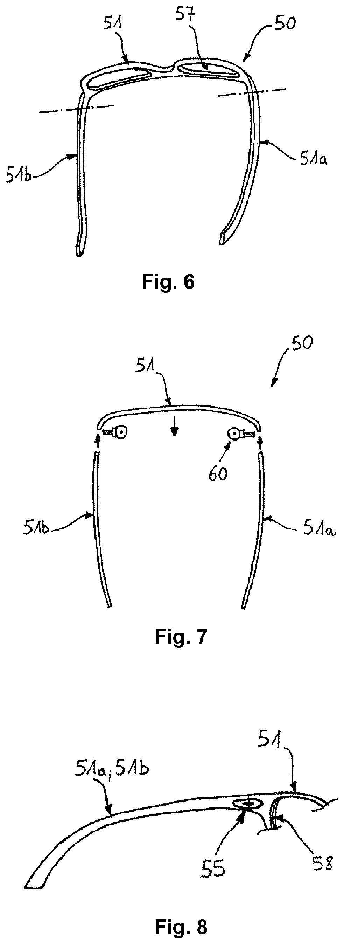

- Fig. 6: ein gemäß dem in Fig. 5 gezeigten Verfahrensschritt erhaltenes Brillengestell, sowie einen weiteren Schritt des erfindungsgemäßen Verfahrens;
- Fig. 7: einen weiteren Verfahrensschritt des erfindungsgemäßen Verfahrens;
- Fig. 8: einen noch weiteren Verfahrensschritt des erfindungsgemäßen Verfahrens; und

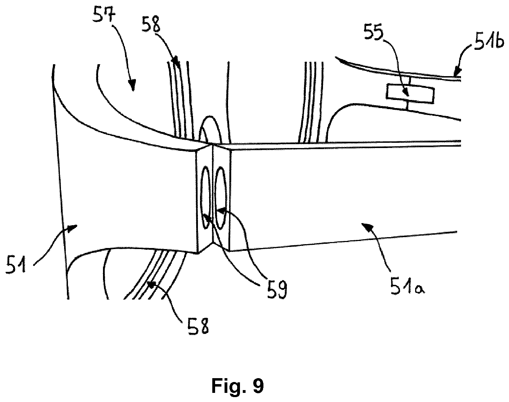

- Fig. 9: eine perspektivische Detailansicht eines erfindungsgemäßen Brillengestells im Anlenkbereich der Bügel an die Fassung.

### Detaillierte Beschreibung der Erfindung

Anhand der nachfolgenden Figuren werden die grundlegenden Schritte eines erfindungsgemäßen Verfahrens zur Herstellung eines Brillengestells, das eine Fassung und zwei Bügel umfasst, näher beschrieben.

**Fig. 1** zeigt einen mehrlagigen Papierstapel 10, der in einem ersten Verfahrensschritt des Verfahrens zur Herstellung eines Brillengestells hergestellt wird, und **Fig. 2** zeigt einen Querschnitt durch einen gemäß dem ersten Verfahrensschritt hergestellten Papierstapel 10.

Zur Herstellung des Papierstapels 10 werden eine Anzahl von Papierblättern 20 übereinander gestapelt, wobei zwischen den einzelnen Lagen bzw. zwischen den einzelnen Papierblättern ein Klebemittel 22 eingebracht wird, mit dem die einzelnen Papierblätter unlösbar miteinander verbunden werden. Als Klebemittel 22 kann ein Harz, insbesondere ein nicht toxisches Harz, verwendet werden, wobei ein Zwei-Komponenten-Harz bzw. Epoxidharz besonders vorteilhaft ist. Das Klebemittel bzw. das Harz ist dabei so zu wählen, dass dieses nach dem Stapeln der Papierblätter einerseits nicht zu schnell trocknet und andererseits die Papierblätter nicht durchnässt. Damit wird gewährleistet, dass nach Abschluss des ersten Verfahrensschrittes der Papierstapel 10 einerseits bereits eine gewissen Festigkeit aufweist und andererseits dennoch eine gewisse Biegsamkeit bzw. Flexibilität aufweist, um den Papierstapel in den nachfolgenden Bearbeitungsschritten weiterverarbeiten zu können bzw. erfindungsgemäß biegen zu können, ohne dass der Papierstapel 10 aufquillt oder gar reißt. Bei dem hier gezeigten Brillengestell ist als Klebemittel der Zwei-Komponenten-Harz "Xepox 14" des Herstellers CENCI LEGNO S.a.S, Como, Italien, verwendet worden.

Nach dem Stapeln und Verkleben der Papierblätter 20 mit dem Klebstoff 22 kann der Stapel leicht angetrocknet werden, bevor der Papierstapel 10 der weiteren Verarbeitung zugeführt wird.

Als vorteilhaft hat sich erwiesen, wenn zur Herstellung des Papierstapels 10 zwischen 5 und 50 Blatt Papier verwendet werden, wobei die Anzahl der verwendeten Papierblätter einerseits von der gewünschten Stabilität des herzustellenden Brillengestells oder andererseits von der Dicke der einzelnen Papierblätter abhängt. Als besonders vorteilhaft hat sich erwiesen, wenn für die Herstellung des Papierstapels gemäß dem ersten Verfahrensschritt zwischen 10 und 20 Blatt Papier verwendet werden, die mit dem Klebemittel 22 miteinander verklebt werden.

Erfindungsgemäß können anstelle von Papierblättern auch Blätter aus papierähnlichem Material und/oder Blätter aus einem Material mit papierähnlichen Eigenschaften verwendet werden.

In dem ersten Verfahrensschritt können an der Oberseite und/oder an der Unterseite des Papierstapels 10 eine Oberflächenlage 21a, 21b aufgebracht werden, wobei die Oberflächenlagen 21a, 21b mit dem Papierstapel 10 verbunden bzw. verklebt werden. Als Oberflächenlagen 21a, 21b können ebenfalls Papierblätter, Blätter aus papierähnlichem Material oder Blätter aus einem Material mit papierähnlichen Eigenschaften verwendet werden. Die Oberflächenlagen 21a, 21b bilden nach dem Herstellungsprozess die sichtbare Oberfläche des Brillengestells. Daher können als Oberflächenlagen insbesondere farbige oder mit einem Muster bedruckte Blätter verwendet werden.

Zum Verkleben der Oberflächenlagen 21a, 21b mit dem Papierstapel 10 haben sich zwei Verfahren als besonders vorteilhaft herausgestellt.

In einem ersten Verfahren werden die Oberflächenlagen 21a, 21b mit demselben oder mit einem ähnlichen Klebemittel auf die Oberfläche des Papierstapels geklebt, der auch zwischen die Papierlagen des Papierstapels eingebracht wurde. Das Klebemittel und/oder die aufgebrachten Oberflächenlagen 21a, 21b sind dabei vorzugsweise so angepasst, dass das Klebemittel die Oberflächenlage zumindest teilweise, vorzugsweise vollständig durchdringt bzw. imprägniert und die Oberflächenlage dadurch zumindest teilweise transparent ausgestaltet, sodass das erste Blatt Papier unterhalb der Oberflächenlage sichtbar wird bzw. sichtbar ist.

In einem alternativen Verfahren kann an der dem Papierstapel 10 zugewandten Oberfläche der Oberflächenlage 21a, 21b oder an der Oberfläche des Stapels 10 eine Schutzschicht aufgebracht werden, mit der die Oberflächenlage mit dem Stapel 10 unlösbar verbunden bzw. verklebt wird, wobei die Schutzschicht vorzugsweise so gewählt ist, dass sie das äußere Erscheinungsbild der Oberflächenlage weitestgehend nicht verändert. Polypropylen hat sich als für diese Schutzschicht geeignetes Material erwiesen. Die Schutzschicht verleiht dem Brillengestell einerseits eine zusätzliche Stabilität und andererseits wird der zwischen den beiden Schutzschichten angeordnete Papierstapel 10 vor äußeren Einflüssen weitestgehend geschützt.

Anhand von **Fig. 3** wird der dem mit Bezug auf Fig. 1 und Fig. 2 beschriebenen ersten Verfahrensschritt nachfolgende zweite Verfahrensschritt näher erläutert.

In diesem zweiten Verfahrensschritt wird der in dem ersten Verfahrensschritt erzeugte und gegebenenfalls mit den Oberflächenlagen versehene Papierstapel 10 gebogen, um eine Grundform des Brillengestells zu erhalten. Der Stapel 10 wird dabei gebogen, solange das Klebemittel 22 noch nicht ausgehärtet ist.

Vorteilhafterweise wird zum Biegen des Stapels 10 ein Formwerkzeug bzw. ein Stempel 30 verwendet, an dessen Oberfläche der Stapel 10 angelegt wird, wobei das Formwerkzeug bzw. der Stempel 30 die Form der Grundform des herzustellenden Brillengestells aufweist. Je nach Grundform des herzustellenden Brillengestells können unterschiedlich geformte Formwerkzeuge bzw. Stempel 30 vorgesehen sein. Beispielsweise können zur Herstellung eines Brillengestells für Kinderbrillen Stempel 30 verwendet werden, die eine geringere Breite aufweisen als Stempel 30 für die Herstellung eines Brillengestells für Erwachsenenbrillen.

Der gebogene bzw. an dem Stempel 30 anliegende Stapel 10 verbleibt solange an dem Stempel 30, bis der Stapel 10 weitestgehend getrocknet ist und/oder bis das Klebemittel weitestgehend ausgehärtet ist.

Um den Trocknungsprozess und/oder den Aushärteprozess zu beschleunigen und um zu gewährleisten, dass der Stapel 10 während des Trocknungs- und/oder Aushärteprozesses an dem Stempel 30 verbleibt, kann das Formwerkzeug 30 bzw. der Stempel und der an dem Stempel 30 anliegende Stapel 10 einer Unterdruck- oder Vakuumbehandlung unterzogen werden, die gewährleistet, dass der Stapel 10 an die Oberfläche des Stempels 30 gedrückt bzw. gepresst wird. Hierzu kann der Stempel 30 und der an der Oberfläche des Stempels 30 anliegende Stapel in einen Foliensack gegeben werden. Durch Absaugen der Luft aus dem Foliensack presst sich die Folie an den Stapel 10 und drückt diesen gegen den Stempel 30. Um ein anschließendes Lösen des Foliensackes von dem Stapel 10 zu erleichtern, kann es vorgesehen sein, an der Oberfläche des Stapels, der mit dem Foliensack in Berührung kommt, ein Trennmittel aufzubringen. Der Foliensack mit dem darin angeordneten Stempel 30 bzw. Stapel 10 wird einer Unterdruck- oder Vakuumeinrichtung zugeführt, die dafür sorgt, dass während des Trocknungs- bzw. Aushärtungsprozesses ein gleichbleibender bzw. konstanter Unterdruck aufrechterhalten bleibt.

Neben dem Anpressen des Stapels 10 an den Stempel 30 wird durch die Unterdruck- bzw. Vakuumbehandlung des Stapels 10 erreicht, dass das zwischen den Papierblättern eingebrachte Klebemittel einerseits gleichmäßig verteilt wird und andererseits in die Papierblätter hineingepresst wird, sodass eine besonders hohe und gleichmäßige Stabilität des herzustellenden Brillengestells gewährleistet ist.

Das Formwerkzeug bzw. der Stempel 30 und der an dem Stempel 30 anliegende Stapel 10 verbleibt vorzugsweise solange in der Unterdruck- oder Vakuumeinrichtung, bis der Stapel 10 weitestgehend getrocknet ist und/oder bis das Klebemittel weitestgehend ausgehärtet ist.

In einer alternativen Ausgestaltung des erfindungsgemäßen Verfahrens können die Oberflächenlagen 21a, 21b auch nach dem Biegen des Stapels bzw. nach dem Trocknungs- bzw. Aushärteprozess auf die Oberfläche des Stapels 10, wie vorstehend beschrieben, aufgebracht werden.

**Fig. 4** zeigt einen ausgehärteten bzw. getrockneten und geformten Papierstapel 10, der die Grundform 40 für ein oder mehrere Brillengestelle 50 bildet.

**Fig. 5** zeigt die Grundform 40, aus der in einem nächsten Verfahrensschritt die Brillengestelle 50 herausgetrennt werden.

Zum Heraustrennen der Brillengestelle 50 aus der ausgehärteten und geformten Grundform 40 wird vorzugsweise eine fünfachsige Fräsmaschine verwendet, mit der das Fräswerkzeug entlang der drei Achsen verfahrbar ist und mindestens um eine Achse schwenkbar ist. Das Herausfräsen der Brillengestelle 50 aus der Grundform 40 erfolgt vorzugsweise vollautomatisch, indem die Fräsmaschine entsprechend programmiert wird. Erfindungsgemäß können dabei aus einer Grundform 40 mehrere und gegebenenfalls unterschiedliche Brillengestelle 50 herausgetrennt werden.

Ferner können während des Fräsvorganges in dem auszufräsenden Brillengestell Nuten 58 (vgl. Fig. 8 und Fig. 9) eingefräst werden, die zur Aufnahme eines Brillenglases bzw. zum Befestigen eines Brillenglases in der Fassung des Brillengestells vorgesehen sind. Für das Ausfräsen dieser Nuten kann es erforderlich sein, dass das Fräswerkzeug durch ein dafür geeignetes Fräswerkzeug ersetzt wird.

**Fig. 6** zeigt ein aus der Grundform 40 herausgetrenntes Brillengestell 50. Das Brillengestell 50 umfasst eine Fassung 51 und zwei Bügel 51a, 51b, wobei nach dem Heraustrennen des Brillengestells 50 aus der Grundform 40 das Brillengestell zunächst einteilig bzw. einstückig ausgestaltet ist.

In einem weiteren Verfahrensschritt werden die Bügel 51a, 51b von der Fassung 51 abgetrennt, beispielsweise unter Verwendung einer Schneidemaschine, etwa einer Tischsäge mit rotierendem Schneidblatt. Dies ist notwendig, um mit den nachfolgenden Verfahrensschritten ein Brillengestell zu erhalten, bei dem die Bügel 51a, 51b an die Fassung 51 angelenkt sind und relativ zur Fassung 51 verschwenkt werden können.

Sofern auf die schwenkbare Anordnung der Bügel 51a, 51b an der Fassung 51 verzichtet werden soll, kann auf die nachfolgenden mit Bezug auf Fig. 7 und Fig. 8 beschriebenen Verfahrensschritte verzichtet werden.

Alternativ zum vollständigen Abtrennen der Bügel kann es vorgesehen sein, dass die Bügel 51a, 51b lediglich teilweise von der Fassung 51 abgetrennt werden, d.h. dass das Brillengestell 50 an der Außenseite jeweils im Bereich, in dem die Bügel an die Fassung angelenkt sein sollen, eingeschnitten wird, ohne die Bügel vollständig von der Fassung abzutrennen. Der verbleibende, nicht durchtrennte Abschnitt dient dann als Schwenkmittel, mit dem die Bügel 51a, 51b an die Fassung 51 angelengt sind. Dieser Abschnitt kann zusätzlich verstärkt werden, etwa durch aufbringen einer Kunststoffschicht.

Anhand **Fig. 7** wird der auf das Abtrennen der Bügel 51a, 51b von der Fassung 51 folgende Verfahrensschritt näher beschrieben. Gemäß dem in Fig. 7 gezeigten Verfahrensschritt werden in den Bügeln 51a, 51b und an der Fassung 51 Aussparungen ausgefräst, in die ein Schwenkmittel, etwa ein Scharnier, eingebracht und befestigt werden kann.

In einer konkreten Ausgestaltung dieses Verfahrensschrittes werden zwei Seitenfräseinrichtungen 60 verwendet, die in einem bestimmten Abschnitt zueinander auf einer Arbeitsplatte angeordnet sind, wobei die jeweiligen Fräswerkzeuge seitlich nach außen gerichtet sind. Der Abstand der beiden Seitenfräseinrichtungen auf der Arbeitsplatte ist einstellbar und wird vorzugsweise so eingestellt, dass dieser dem Abstand der beiden Bügel 51a, 51b an der Fassung 51 des Brillengestells 50 entspricht.

Zum Herstellen der Aussparungen an der Fassung 51 und an den Bügeln 51a, 51b wird die Fassung 51 von einer Seite an die Seitenfräseinrichtungen herangeführt, wie durch den nach unten zeigenden Pfeil verdeutlicht. Die beiden Bügel 51a, 51b werden von der anderen Seite an die Seitenfräseinrichtungen 60 herangeführt, wie durch die beiden nach oben gerichteten Pfeile verdeutlicht. Dadurch wird sowohl an der Fassung 51 als auch an den beiden Bügeln 51a, 51b jeweils ein Teil der Aussparung erzeugt, in die die Schwenkmittel bzw. Scharniere eingebracht werden können.

In einer alternativen Ausgestaltung des erfindungsgemäßen Verfahrens können die Aussparungen für die Scharniere auch erzeugt werden, bevor die Bügel 51a, 51b von der Fassung 51 getrennt werden. Hierbei können ebenfalls zwei Seitenfräseinrichtungen verwendet werden. Nach dem Herstellen der entsprechenden Aussparungen in dem Brillengestell 50 können die Bügel des Brillengestells von der Fassung abgetrennt werden, wie mit Bezug auf Fig. 6 erläutert.

Wie in **Fig. 8** ersichtlich, werden in einem nächsten Verfahrensschritt die Scharniere 55 in die hierfür vorgesehenen Aussparungen eingebracht und sowohl an der Fassung 51 als auch an dem jeweiligen Bügel 51a, 51b befestigt. Das Befestigen der Scharniere kann mit einem Klebemittel oder alternativ mit Schraubmittel erfolgen.

In einer alternativen Ausgestaltung der Erfindung können die Scharniere bzw. die Schwenkmittel 55 aus einem Stück Papier (z.B. 120 g/m²) bestehen, die sowohl an die Bügel als auch an die Fassung geklebt wird.

Anstelle eines Stück Papier kann auch eine Anzahl, etwa zwei bis vier, gestapelter und mit einem Klebemittel verklebter Materiallagen bzw. Papierlagen verwendet werden, wobei zum Verkleben der Papierlagen ebenfalls ein Harz verwendet wird. Aus den verklebten Papierlagen können Streifen herausgetrennt werden, die sowohl an die Bügel als auch an die Fassung geklebt werden und damit als Scharnier wirken. Anstelle des Verklebens können die Papierlagen auch mit einem Faden miteinander vernäht werden, vorzugswiese mit einem Zick-Zack-Stich. Der Zick-Zack-Stich gewährleistet, dass die Streifen gebogen werden können ohne dass der Nähfaden reißt.

In einem abschließenden Verfahrensschritt oder vor dem Anbringen der Scharniere kann das Brillengestell poliert, geschliffen und/oder geglättet werden, um beispielsweise Grate bzw. Unebenheiten zu beseitigen. Ferner können an dem Bügel 51a bzw. 51b Modellbezeichnungen und sonstige Hinweise aufgedruckt oder mit einer Lasereinrichtung aufgebrannt werden. Schließlich kann das Brillengestell 50 mit einer Schutzschicht überzogen werden, um das Brillengestell vor äußeren Einflüssen, insbesondere Umwelteinflüssen, zu schützen. Als Schutzschicht kann beispielsweise ein Lack, insbesondere ein Klarlack, aufgebracht werden.

Dieser abschließende Verfahrensschritt kann in einer alternativen Ausgestaltung auch vor dem in Fig. 8 gezeigten Verfahrensschritt erfolgen, sodass als letzter Verfahrensschritt lediglich die Scharniere angebracht werden müssen.

**Fig. 9** zeigt eine perspektivische Detailansicht eines erfindungsgemäßen Brillengestells im Anlenkbereich der Bügel 51a, 51b an die Fassung 51. Wie bei dem vorderen Bügel 51a ersichtlich, weisen die Bügel im Anlenkbereich stirnseitig eine Aussparung 59 auf, in die ein Magnet eingebracht werden kann. An der Fassung ist ebenfalls ein mit der Aussparung des Bügels korrespondierende Aussparung vorgesehen, in die ebenfalls ein Magnet eingebracht ist. Die Magnete können in die Aussparungen geklebt werden. Mit Hilfe der Magnete wird gewährleistet, dass die geöffneten Bügel in der geöffneten Position bleiben und nicht selbständig zusammenklappen.

An dem hinteren Bügel 51b ist ein als Papierstreifen ausgestaltetes Scharnier 55 gezeigt, das sowohl an dem Bügel 51b als auch an der Fassung 51 angeklebt ist.

Das erfindungsgemäße Brillengestell bzw. das gemäß dem erfindungsgemäßen Verfahren hergestellte Brillengestell zeichnet sich insbesondere dadurch aus, dass die Herstellung besonders einfach und aufgrund der verwendeten Materialien besonders kostengünstig erfolgen kann, wobei gleichzeitig gewährleistet ist, dass das Brillengestell die für den täglichen Gebrauch notwendige Festigkeit und Stabilität aufweist.

Ein weiterer Vorteil liegt darin, dass das Brillengestellt zwar gebogen werden kann, dabei aber nicht bricht und vorzugsweise in die ursprüngliche Form zurückkehrt. Sollte ein gebogener Bereich bzw. Abschnitt einmal nicht in die ursprüngliche Form zurückkehren, so ist es möglich den Knickbereich leicht zu erwärmen und den gebogenen Bereich manuell in die ursprüngliche Stellung zurückzubringen.

### Bezugszeichen:

- 10: Stapel (z.B. mehrlagiger Papierstapel)
- 20: Materiallage, z.B. Blatt des Papierstapels 10
- 21a, 21b: Oberflächenlagen, oben bzw. unten liegende (sichtbare) Materiallagen des Stapels 10
- 22: Klebemittel (z.B. Harz) zwischen den Materiallagen des Stapels 10
- 30: Formwerkzeug
- 40: ausgehärteter und geformter Stapel bzw. Grundform des Brillengestells 50
- 50: Brillengestell bzw. Brillenrahmen
- 51: Fassung des Brillengestells 50
- 51a, 51b: Bügel des Brillengestells 50
- 55: Schwenkmittel (z.B. Scharniere)
- 57: Aussparung in der Fassung 51 zur Aufnahme eines Brillenglases
- 58: Nuten zur Aufnahme eines Brillenglases
- 59: Aussparungen zur Aufnahme von Magneten
- 60: Fräsmittel

## Patentansprüche

1. Verfahren zur Herstellung eines Brillengestells (50), umfassend eine Fassung (51) und Bügel (51a; 51b), wobei
- aus einer Anzahl von Materiallagen (20), die Papierblätter, Blätter aus papierähnlichem Material oder Blätter aus einem Material mit papierbähnlichen Eigenschaften umfassen, ein Stapel (10) hergestellt wird, wobei zwischen den Materiallagen (20) ein aushärtbares Klebemittel (22) eingebracht wird, um die Materiallagen (20) unlösbar miteinander zu verbinden,
- aus dem hergestellten Stapel (10) das Brillengestell (50) herausgetrennt wird, wobei vor dem Heraustrennen des Brillengestells (50) der herdestellte Stapel (10) unter Verwendung eines Formwerkzeuges (30) gebogen wird, solange das Klebemittel (22) nicht ausgehärtet ist, um eine Grundform (40) des Brillengestells (50) zu erhalten, aus der das Brillengestell (50) mit einer Schneideeinrichtung herausgetrennt wird, nachdem die Grundform (40) ausgehärtet ist, und
- nach dem Heraustrennen des Brillengestells (50) aus der Grundform (40) das Brillengestell (50) zunächst einteilig ausgestaltet ist.

2. Verfahren nach dem vorhergehenden Anspruch, wobei in das Brillengestell (50) Nuten (58) gefräst werden, zur Aufnahme von Brillengläser.

3. Verfahren nach einem der vorhergehenden Ansprüche, wobei das Formwerkzeug (30) und der an dem Formwerkzeug anliegende Stapel (10) einer Unterdruck- oder Vakuumeinrichtung zugeführt werden, mit der der Stapel (10) an das Formwerkzeug (30) gepresst wird, wobei das Formwerkzeug (30) und der an dem Formwerkzeug anliegende Stapel (10) solange in der Unterdruck- oder Vakuumeinrichtung verbleibt, bis der Stapel (10) weitestgehend getrocknet ist und/oder bis das Klebemittel (22) weitestgehend ausgehärtet ist.

4. Verfahren nach einem der vorhergehenden Ansprüche, wobei vor dem Biegen des Stapels (10) an der Oberseite und/oder an der Unterseite des Stapels (10) zumindest eine Oberflächenlage (21a; 21b), die Papierblätter, Blätter aus papierähnlichem Material oder Blätter aus einem Material mit papierähnlichen Eigenschaften umfasst, aufgebracht wird und mit dem Klebemittel (22) mit dem Stapel (10) unlösbar verbunden wird.

5. Verfahren nach dem vorhergehenden Anspruch, wobei die Oberflächenlage (21a, 21b) und/oder das Klebemittel (22) angepasst sind, dass das Klebemittel (22) die Oberflächenlage (21a; 21b) durchdringt und die Oberflächenlage (21a; 21b) dadurch zumindest teilweise transparent ausgestaltet.

6. Verfahren nach einem der vorhergehenden Ansprüchen, wobei bei dem herausgetrennten Brillengestell (50) die Bügel (51a; 51b) von der Fassung (51) abgetrennt werden, vorzugsweise unter Verwendung einer Schneidemaschine, und wobei die abgetrennten Bügel (51a; 51b) jeweils mit einem Schwenkmittel (55), vorzugsweise Scharniere, an die Fassung (51) angelenkt werden,

7. Verfahren nach einem der vorhergehenden Ansprüche, wobei
- nach dem Heraustrennen des Brillengestells (50)
- die Oberfläche des Brillengestells (50) poliert, geschliffen und/oder geglättet wird, und/oder
- die Oberfläche des Brillengestells (50) mit einer Schutzschicht, insbesondere Lackschicht überzogen wird,

8. Verfahren nach einem der vorhergehenden Ansprüche, wobei das Klebemittel (22) ein Harz, insbesondere einen Zwei-Komponenten-Harz oder Epoxidharz umfasst,

## Claims

1. A method for manufacturing a spectacle frame (50) comprising a chassis (51) and side arms (51a; 51b), wherein
- a number of material layers (20) comprising paper sheets, sheets of a paper-like material or sheets made of a material having paper-like properties are made into a stack (10), a curable adhesive (22) being inserted between the material layers (20) in order to undetachably interconnect said material layers (20),
- the spectacle frame (50) is separated from the stack (10) that has been produced in this manner, said stack (10) thus produced being bent using a forming tool (30) prior to the separation of the spectacle frame (50) while the adhesive (22) has not yet finished curing in order to obtain a basic form (40) of the spectacle frame (50) from which the spectacle frame (50) is separated once the basic form (40) has finished curing, and
- once the spectacle frame (50) has been separated from the basic form (40), said spectacle frame (50) is initially configured as a single piece.

2. The method as claimed in the preceding claim, wherein the spectacle frame (50) has grooves (58) milled therein and designed for receiving lenses.

3. The method as claimed in any of the preceding claims, wherein the forming tool (30) and the stack (10) applied to said forming tool are supplied to a negative pressure or vacuum device by means of which the stack (10) is pressed against the forming tool (30), said forming tool (30) and said stack (10) applied to said forming tool remaining in said negative pressure or vacuum device until the stack (10) has largely finished drying and/or until the adhesive (22) has largely finished curing.

4. The method as claimed in any of the preceding claims, wherein prior to the bending of the stack (10) at least one surface layer (21a; 21b) which comprises paper sheets, sheets of a paper-like material or sheets made of a material having paper-like properties is applied onto the top surface and/or onto the bottom surface of the stack (10) and is undetachably connected to said stack (10) by means of the adhesive (22).

5. The method as claimed in the preceding claim, wherein the surface layer (21a; 21b) and/or the adhesive means (22) are adapted in such a manner that the adhesive (22) permeates the surface layer (21a; 21b), thus rendering said surface layer (21a; 21b) at least partially transparent.

6. The method as claimed in any of the preceding claims, wherein the spectacle frame (50), once separated, has its side arms (51a; 51b) cut off from the chassis (51), preferably using a cutting machine, and wherein the cut-off side arms (51a; 51b) are each hingedly attached to the chassis (51) using a pivot means (55) which is preferably in the form of hinges.

7. The method as claimed in any of the preceding claims, wherein once the spectacle frame (50) has been separated
- the surface of the spectacle frame (50) is polished, ground and/or smoothed, and/or
- the surface of the spectacle frame (50) is coated by a protective layer, in particular a varnish layer.

8. The method as claimed in any of the preceding claims, wherein the adhesive (22) comprises resin, in particular a two-component resin or an epoxy resin.

## Revendications

1. Procédé destiné à fabriquer une armature de lunettes (50) comprenant une monture (51) et des branches (51a; 51b), lors duquel
- une pile (10) est fabriquée à partir d'un nombre donné de couches de matériau (20) lesquelles comprennent des feuilles de papier, des feuilles constituées en matériau analogue au papier ou des feuilles constituées en un matériau offrant des propriétés analogues au papier, une matière adhésive (22) durcissable étant placée entre les couches de matériau (20) afin d'unir entre elles lesdites couches de matériau (20) de manière indissociable,
- l'armature de lunettes (50) est séparée de la pile (10) ainsi fabriquée, ladite pile (10) ainsi fabriquée étant cintrée, avant même la séparation de l'armature de lunettes (50), au moyen d'un gabarit (30), et ce alors que la matière adhésive (22) n'a pas encore durci, afin d'obtenir une forme de base (40) de l'armature de lunettes (50) à partir de laquelle, après que la forme de base (40) a fini de durcir, l'armature de lunettes (50) est séparée à l'aide d'un dispositif de coupe et
- après que l'armature de lunettes (50) a été séparée de la forme de base (40), l'armature de lunettes (50) est, dans un premier temps, constituée en une seule pièce.

2. Procédé selon la revendication précédente, lors duquel des rainures (58) sont fraisées dans l'armature de lunettes (50) en vue de recevoir des verres de lunettes.

3. Procédé selon l'une quelconque des revendications précédentes, lors duquel le gabarit (30) et la pile (10) qui épouse ledit gabarit sont amenés à un dispositif à dépression ou dispositif sous vide grâce auquel la pile (10) est pressée contre le gabarit (30), le gabarit (30) et la pile qui épouse ledit gabarit restant dans le dispositif à dépression ou dispositif sous vide jusqu'à ce que la pile (10) ait fini en grande partie de sécher et/ou jusqu'à ce que la substance adhésive (22) ait fini en grande partie de durcir.

4. Procédé selon l'une quelconque des revendications précédentes, lors duquel avant le cintrage de la pile (10), au moins une couche de surface (21a; 21b) qui comprend des feuilles de papier, des feuilles constituées en matériau analogue au papier ou des feuilles constituées en un matériau offrant des propriétés analogues au papier est appliquée sur la face supérieure et/ou sur la face inférieure de ladite pile (10) et est unie de manière indissociable à la pile (10) grâce à la substance adhésive (22).

5. Procédé selon la revendication précédente, lors duquel la couche de surface (21a; 21b) et/ou la substance adhésive (22) sont conçues de telle sorte que la substance adhésive (22) imprègne la couche de surface (21a; 21b), rendant ainsi ladite couche de surface (21a; 21b) au moins en partie transparente.

6. Procédé selon l'une quelconque des revendications précédentes, lors duquel, une fois l'armature de lunettes (50) séparée, les branches (51a; 51b) sont séparées de la monture (51) de préférence au moyen d'une machine de coupe, et lors duquel les branches (51a; 51b) ainsi séparées sont couplées à la monture (51), et ce respectivement grâce à un moyen d'articulation (55), de préférence des charnières.

7. Procédé selon l'une quelconque des revendications précédentes, lors duquel après la séparation de l'armature de lunettes (50),
- la surface de l'armature de lunettes (50) est polie, poncée et/ou lissée, et/ou
- la surface de l'armature de lunettes (50) est recouverte d'une couche protectrice, en particulier d'une couche de vernis.

8. Procédé selon l'une quelconque des revendications précédentes, lors duquel la substance adhésive (22) comprend une résine, en particulier une résine à deux composants ou résine époxyde.
